(19) Europäisches Patentamt
European Patent Office
Office européen des brevets

(11) **EP 1 826 057 B1**

(12) **EUROPEAN PATENT SPECIFICATION**

(45) Date of publication and mention
of the grant of the patent:
**29.07.2009 Bulletin 2009/31**

(51) Int Cl.:
**B60L 1/14** (2006.01)   **H05B 37/00** (2006.01)
**B60Q 1/00** (2006.01)

(21) Application number: **07103011.8**

(22) Date of filing: **23.02.2007**

(54) **Device for controlling an electrical utility in a vehicle**

Vorrichtung zur Steuerung eines elektrischen Dienstprogramms in einem Fahrzeug

Dispositif de contrôle d'un utilitaire électrique dans un véhicule

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **24.02.2006  IT TO20060129**

(43) Date of publication of application:
**29.08.2007   Bulletin 2007/35**

(73) Proprietor: **FIAT AUTO S.p.A.**
**10135 Torino (IT)**

(72) Inventors:
• **Evangelisti, Piergottardo**
**10135 Torino (IT)**

• **Biancotti, Marco**
**10135 Torino (IT)**
• **Rubin, Roberta**
**10135 Torino (IT)**

(74) Representative: **Jorio, Paolo et al**
**STUDIO TORTA**
**Via Viotti 9**
**10121 Torino (IT)**

(56) References cited:
**WO-A2-02/078405**          **US-A- 5 418 435**
**US-B1- 6 441 557**

**Description**

This invention relates to a device for controlling an electrical utility in a vehicle.

In particular this invention relates to a device which is capable of controlling electrical utilities comprising, for example, the lamps used in the headlamps of road vehicles, to which the description which follows will make explicit reference without thereby losing its general nature. Such a device is disclosed in US 6 441 557.

As is known, the lamps used in latest generation road vehicle headlamps are controlled by electronic devices which are capable of using a PWM (acronym for Pulse Width Modulation) technique. Use of the abovementioned PWM modulation for the control of lamps is particularly advantageous because it allows each lamp to be used for several headlamp functions independently of its electrical characteristics.

In fact by suitably modulating the time width of the control signal pulses fed to the lamp, control of the light intensity emitted thereby which is independent of its rated power is achieved. Thus, for example, a lamp having a rated power dimensioned to perform the function of a stop light may be used to perform the function of a rear light through suitable PWM control, while a dipping lamp may also perform the function of a daytime light or a non-dipping lamp function.

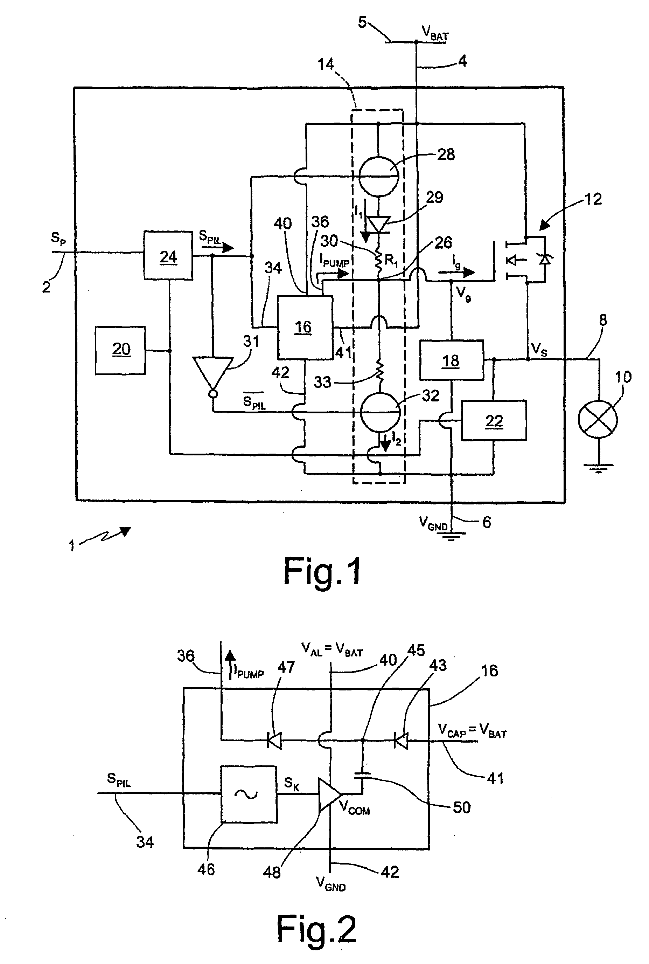

Figure 1 shows an outline circuit diagram of a known electronic device implementing PWM modulation to control a lamp installed on a vehicle (not shown).

In particular, according to the illustration in Figure 1, the electronic device, which is indicated as a whole by 1, comprises a first input 2 receiving a control signal Sp of the PWM type, a second input 4 connected to a power supply line 5 set to a predetermined feed potential $V_{BAT}$ (typically equal to 12 V), a third input 6 set to a ground potential $V_{GND}$ (typically equal to 0 V), and a control output 8 connected to an electrical utility corresponding to a lamp 10, in order to provide the latter with a control voltage Vs.

Electronic device 1 also comprises a control switch comprising an NMOS transistor 12, a current generating stage 14, a current amplification device 16, a current limiting block 18, a temperature detector block 20, a protection block 22 and control logic 24.

NMOS transistor 12 has a well potential connected to second input terminal 4, a source terminal connected to output terminal 8, and a gate terminal set to a gate potential Vg. The gate terminal of NMOS transistor 12 is also connected to an intermediate node 26 to receive an input current Ig.

As regards current generator stage 14, this comprises a pair of current generators which are connected in cascade between second input 4 and third input 6 and are activated selectively by control logic 24 in phase opposition between them through a control logic signal $S_{Pil}$.

In particular the first current generator, indicated below by 28, is connected on one side to second input 4 and on the other side to intermediate node 26 through a diode 29 and a resistor 30 connected together in series. In greater detail, resistor 30 has a resistance of $R_1$, while first current generator 28 is capable of supplying a current $I_1$ to intermediate node 26.

The second current generator, indicated below by 32, is instead connected on one side to second input 6 set to the ground potential $V_{GND}$ and on the other side to intermediate node 26 through a resistor 33 and, when active, has the function of draining a second predetermined current $I_2$ from intermediate node 26 to earth.

Control logic 24 is instead connected to first input 2 to receive control signal Sp and is capable of supplying control logic signal $S_{Pil}$ and complementary control logic signal $\overline{S}_{Pil}$, respectively to a first generator 28 and second generator 32 through an inverter 31 so as to selectively activate current generators 28 and 32 in phase opposition with each other.

As far as current limiter block 18 is concerned, this has the function of connecting intermediate node 26 to third input 6 set to the ground potential $V_{GND}$ when an excess current is detected in control output 8 (for example in the case of a short circuit) so as to activate "self-shutdown" of electronic device 1, while protection block 22 and temperature detector block 20 act together to protect the electronic device from excess temperature conditions. For this purpose, when it detects that a predetermined threshold in the detected temperature has been exceeded temperature detector block 20 controls through protection block 22 the connection between control output 8 and third input 6 set to the ground potential $V_{GND}$.

In greater detail, current limiter block 18 is capable of acting on the gate terminal of NMOS transistor 12 to limit the maximum current fed to it so as not to damage the transistor's junction and connections so that the increase in temperature generated by a short circuit is sufficiently slow to be intercepted by thermal protection block 22.

With reference to Figures 1 and 2, current amplification device 16 has a first input terminal 34 receiving control signal $S_{Pil}$ generated by control logic 24, an output terminal 36 connected to intermediate node 26 to provide the latter with a pumping current $I_{PUMP}$, a first feed terminal 40 connected to second input 4 and set to a potential $V_{AL} = V_{BAT}$, a second feed terminal 42 connected to third input terminal 6 and set to a ground potential, and a control terminal 41 also connected to second input terminal 4 and therefore set to a potential $V_{CAP} = V_{BAT}$.

In particular, with reference to Figure 2, current amplification device 16 comprises a pair of switching devices 43 and 47 connected in series between control terminal 41 and output terminal 36 through an intermediate connection node 45, and an oscillator 46, a switch driver 48 and a condenser 50 which are connected together in series between first input terminal 34 and intermediate node 45 connecting the two switching devices 43 and 47.

It is worthwhile pointing out that the two switching devices 43 and 47 may be constructed using MOS transistors, or, as shown in the example illustrated in Figure 1, through two diodes, also indicated hereafter by the numbers 43 and 47, or by any other similar electronic switch.

In greater detail, oscillator 46 is provided with an input receiving control signal $S_{PIL}$ and an output providing a clock signal $S_K$ having a predetermined frequency $\nu_{CP}$, while switch driver 48 has a first input connected to the output of oscillator 46, a second input connected to first feed terminal 40, a third input connected to second feed terminal 42 and an output on which a logic signal is provided which adopts a potential $V_{COM}$ which depending upon clock signal $S_K$ switches between the potential $V_{AL} = V_{BAT}$ present on its second input or, alternatively, the ground potential $V_{GND}$ present on its third input.

As far as condenser 50 is concerned, this is connected between the output of switch driver 48 and intermediate connection node 45 and has a capacitance $C_{CP}$.

The operation of electronic device 1 is known and will therefore be described below briefly and only insofar as is necessary for an understanding of the problem underlying this invention. In the case in point the functioning of electronic device 1 will be described during the generation of a rising front of control potential $V_S$ for lamp 10.

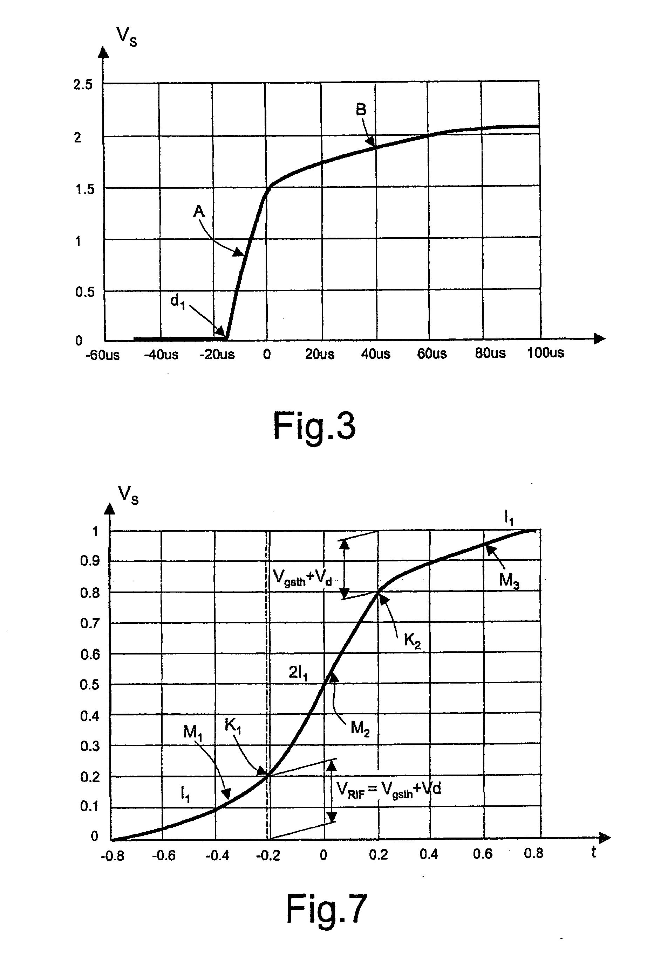

In particular, in the course of the aforesaid stage the operation of electronic device 1 comprises: activation of first current generator 28 through control logic 24 generating current $I_1$ to intermediate node 26, disabling of second current generator 32, activation of current amplification device 16 which generates the pumping current $I_{PUMP}$ to intermediate node 26 and activation of NMOS transistor 12 which on receiving the current $I_g = I_1 + I_{PUMP}$ at its own gate terminal generates a rising front of control potential Vs at control output 8 which then increases progressively from a first predetermined low value to a second predetermined high value following the course illustrated in Figure 3.

During this stage switch driver 48 of current amplification device 16 switches according to clock signal $S_K$ with a switching frequency $\nu_{CP}$ in such a way that the ground potential $V_{GND}$ and alternately the potential $V_{BAT}$ present on first feed terminal 40 is produced at its own output and therefore at potential $V_{COM}$ on the first terminal of condenser 50 in each cycle.

During the switching of switch driver 48, when potential $V_{COM}$ supplied as an output from the latter has the value $V_{GND}$ condenser 50 charges progressively until intermediate node 45 reaches a potential equal to $V_{CAP}$ - Vd which corresponds to $V_{BAT}$ - Vd, where Vd is the potential drop at the terminals of lit diode 43 during this stage (because $V_{CAP} = V_{BAT}$).

When instead switch driver 48 switches its output changing the relative potential $V_{COM}$ to the value $V_{COM} = V_{AL} = V_{BAT}$ condenser 50 helps to "overvoltage" the potential present at intermediate node 45 by a value equal to the potential $V_{AL} = V_{BAT}$, present on the output of switch driver 48, so as to obtain a final value at intermediate node 45 which is equal to $2V_{BAT}$ - Vd.

During this stage diode 47 is lit, current amplification device 16 generates the pumping current $I_{PUMP}$, and current Ig fed as an input to the gate terminal of NMOS transistor 12 adopts values which can be determined from the following relationships:

$$I_g \cong I_1 + I_{PUMP} = \frac{V_{BAT} - Vg - Vd}{R_c} + \nu_{cp} C_{cp} (2V_{BAT} - 2Vd - Vg)$$

1)

when Vg < $V_{BAT}$ - Vd, and

$$I_g \cong I_{PUMP} = \nu_{cp} C_{cp} (2V_{BAT} - 2Vd - Vg)$$

2)

when Vg > $V_{BAT}$ - Vd.

In fact if Vg < $V_{BAT}$ - Vd, diode 29 is lit and makes it possible to supply current $I_1$ to intermediate node 26; however when Vg > $V_{BAT}$ - Vd, diode 29 is not lit and current Ig supplied to the gate terminal of NMOS transistor 12 substantially corresponds to the pumping current $I_{PUMP}$ supplied as an output by current amplification device 16.

On the basis of equations 1) and 2) described above relating to current Ig, and according to the following differential equation 3) *dVg/dt = Ig/Cg* associated with the gate voltage of NMOS transistor 12 (where Cg is the overall gate capacitance of NMOS transistor 12) it can be verified that the rising front for control potential Vs (Vs = Vg - Vgsth, where Vgsth is the threshold voltage for NMOS transistor 12) follows a discontinuous profile defined by two lines having different gradients A and B.

In particular, with reference to Figure 3, during the initial growth stage there is a discontinuity $d_1$ caused by the high gradient of potential Vs in first section A. The change in potential Vs in first section A is substantially of the exponential type, while in the second section B it follows a curved trajectory with a progressively decreasing gradient.

In fact, substituting Ig as indicated in equations 1) and 2) into equation 3) a first order differential equation is obtained from which it is possible to determine the exponential change in potential $V_G$ and as a consequence control potential $V_S$ in first section of line A.

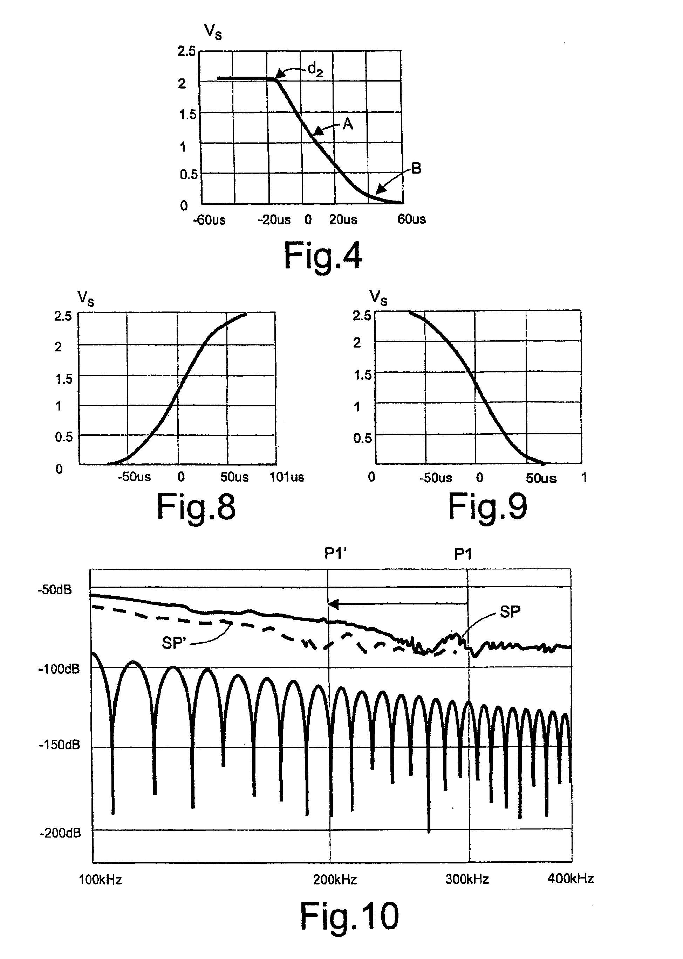

As illustrated in Figure 4, similar behaviour also takes place, although in a substantially attenuated way, in the descending fronts of control potential Vs, which during the initial decreasing period (section of line A) has a discontinuity d2 and a high negative gradient which then terminates in a less steep gradient (section B).

In electronic devices of the type described above the generation of a control potential Vs with rising and descending profiles having discontinuities and gradients of variable steepness gives rise to the undesired emissions of radiofrequency signals corresponding to particularly inconvenient electromagnetic disturbances.

In fact the electromagnetic disturbances generated during switching often overcome the electromagnetic disturbance thresholds specified in current regulations, thus in some cases raising great difficulties for the approval of vehicles.

In addition to this, the electromagnetic disturbances generated by electronic device 1 interfere with the electronic systems mounted on board the vehicle, preventing the latter from operating fully and in some extreme cases prejudicing radio communications from communication devices monitoring user safety functions mounted on board the vehicle.

In order to overcome the abovementioned disadvantages it has been suggested that electronic device 1 should be completely screened so as to attenuate the radiofrequency disturbances generated by it, but this solution has proved to be extremely inconvenient from the point of view of construction costs.

The object of this invention is therefore to provide an electronic control device for electrical utilities which is both economical to manufacture and overcomes the abovementioned disadvantages.

This object is accomplished through this invention in that it relates to an electronic control device for at least one electrical utility as indicated in claim 1 and preferably in any of the subsequent claims which are directly or indirectly dependent on claim 1.

This invention will now be described with reference to the appended drawings, which illustrate a non-restrictive embodiment in which:

-    Figure 1 shows diagrammatically an electronic device for control of an electrical utility constructed in accordance with the known art,
-    Figure 2 shows diagrammatically a current amplification device incorporated in the electronic control device illustrated in Figure 1,
-    Figures 3 and 4 represent the rising and descending fronts respectively of a pulse included in a control signal Vs generated as an output by the electronic device illustrated in Figure 1,
-    Figure 5 shows diagrammatically an electronic device for the control of electrical utilities constructed in accordance with this invention,
-    Figure 6 shows diagrammatically a current amplification device incorporated in the electronic control device illustrated in Figure 5,
-    Figure 7 shows the progress of the rising front of a control signal pulse generated as an output by the electronic device illustrated in Figure 5,
-    Figures 8 and 9 illustrate the rising and descending fronts respectively of a pulse incorporated in a control signal generated as an output by the electronic device illustrated in Figure 5,
-    Figure 10 illustrates an example of the displacement of the spectrum of electromagnetic disturbances generated by the electronic device illustrated in Figure 5 as a control capacitance incorporated in it is varied.

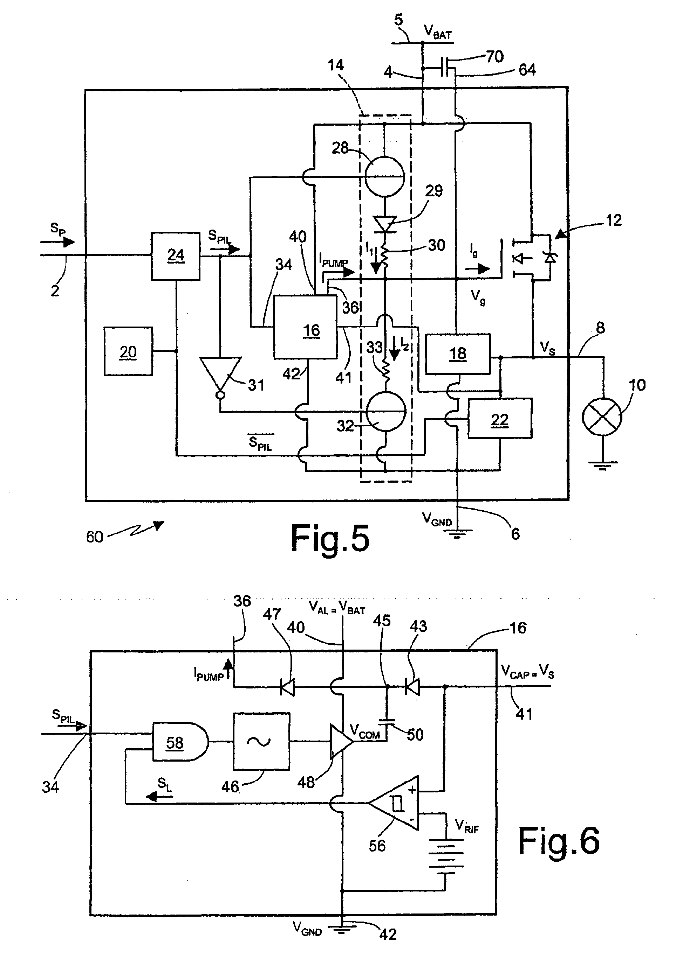

With reference to Figure 5, reference number 60 refers as a whole to an electronic device for the control of at least one electrical utility 10 in a vehicle (not illustrated) such as for example a lamp.

Electronic device 60 is similar to electronic device 1 illustrated in Figure 1, and the corresponding component parts are, where possible, hereinafter distinguished using the same reference numbers used to identify corresponding parts in electronic device 1 described above.

In electronic device 60 in Figure 5, control terminal 41 of current amplification device 16 is no longer directly connected to second input terminal 4 set to potential $V_{BAT}$, but is connected to control output 8 set to control potential Vs.

In addition to this, current amplification device 16 (Figure 6) comprises a comparator 56 which has a first (non-inverting) input connected to control terminal 41 set to a potential $V_{CAP}$ corresponding to control potential $V_{CAP} = V_s$, a second input set to a reference potential $V_{RIF}$, and an output at which a logic signal $S_L$ which has a high logic level when $V_{CAP} > V_{RIF}$ and a low logic level when $V_{CAP} \leq V_{RIF}$ is generated.

Current amplifier device 16 also comprises a logic gate 58 which is preferably of the AND type located downstream from oscillator 46 and has a first input receiving control signal $S_{Pil}$, a second input receiving logic signal $S_L$ generated by a comparator 56 and an output connected to the input of oscillator 46.

The abovementioned variation in the circuit topology of electronic device 60 in comparison with electronic device 1 advantageously brings about a generation of rising and descending switching fronts for control potential Vs characterised by reduced gradients which are substantially linear throughout the entire switching process.

For simplicity of description, only the behaviour of electronic device 60 when generating the rising switching front of control potential $V_S$ present at output 8 will be described below, the descending front of control potential $V_S$ being generated by electronic device 60 on the basis of the same principle according to the invention.

In particular, on the basis of the aforesaid circuit configuration the equations describing current Ig fed to the gate terminal of NMOS transistor 12 are as follows:

$$Ig \cong I_1 + v_{sp}C_{sp}(V_{AL} + V_{CAP} - 2Vd - Vg) \qquad 4)$$

In accordance with the abovementioned configuration, and in particular thanks to the connection between control terminal 41 and control output 8, potentials $V_{AL}$ and $V_{CAP}$ adopt the values $V_{AL} = V_{BAT}$ and $V_{CAP} = Vs = Vg - v_{gsth}$ respectively.

Substituting the new expressions for $V_{AL}$ and $V_{CAP}$ in equation 4, the following equation is obtained:

$$Ig \cong I_1 + v_{sp}C_{sp}(V_{BAT} + Vg - Vgsth - 2Vd - Vg)$$

in which the dependency of current Ig on potential Vg present in the second member is cancelled out, that is

$$Ig \cong I_1 + v_{sp}C_{sp}(V_{BAT} - V_{gsth} - 2Vd) \qquad 5)$$

$$6) \quad dVg/dt = Ig/Cg \;;$$

Then substituting equation 5) for current Ig in the following differential equation and solving 6) with respect to output potential Vs it is found that the latter changes substantially linearly with a constant gradient in the case of both rising fronts (Figure 8) and descending fronts (Figure 9).

In particular, the rising/descending front of potential Vs may adopt a profile corresponding to a symmetrically broken line when the electronic device satisfies a first and a second condition: in particular, the first condition specifies that current amplifier device 16 should be dimensioned in such a way as to generate a pumping current $I_{PUMP}$ equal to current $I_1$ generated by first current generator 28 ($I_{PUMP} = I_1$), while the second condition provides that the reference potential $V_{RIF}$ should be set to the potential $v_{gsth} + V_d$ equal to the sum of the threshold potential for NMOS transistor 12 and the voltage drop at the terminals of a switching device 43 or 47.

In the case in point, with reference to the rising front of control potential Vs illustrated in Figure 7, during a first section M1 the logic signal $S_L$ generated as an output from comparator 56 is at a low logic level, and as a consequence logic gate 58 generates as an output a logic signal having a low logic value which keeps oscillator 46 disabled, thus bringing about a condition disabling current amplifier device 16, which therefore generates a current $I_{PUMP} = 0$.

During this stage therefore current Ig fed to the gate terminal of NMOS transistor 12 remains constant in that it corresponds to the current $I_1$ provided by first current generator 28, and potential Vs increases linearly with a gradient $I_1$ until (corresponding to the point $K_1$ in section M1 in Figure 7) potential Vs reaches the comparison potential $V_{RIF} = v_{gsth} + V_d$.

At this point (when Vs = $v_{gsth} + V_d$), comparator 56 switches its own logic signal $S_L$ bringing about activation of both oscillator 46 and current amplifier device 16 through logic gate 58, generating the pump current $I_{PUMP} = I_1$. In this way current Ig fed to the gate terminal of NMOS transistor 12 adopts values equal to Ig = $I_{PUMP} + I_1 = 2I_1$, and potential Vs (which can be determined using differential equation 4) increases linearly adopting a gradient $2I_1$ which is constant in a second straight section M2 of the broken line until (corresponding to point $K_2$) potential Vs reaches the value Vs = $V_{BAT} - v_{gsth} - V_d$.

When Vs > $V_{BAT} - v_{gsth} - V_d$, diode 29 changes to a disabling condition breaking the circuit feeding current $I_1$ provided by first current generator 28 to intermediate node 26.

During this stage the current Ig fed to the input terminal of NMOS transistor 12 therefore corresponds to the pumping current $I_{PUMP} = I_1$ generated by current amplifier device 16, and voltage Vs again increases linearly (length of the symmetrical broken line indicated by $M_3$) which has a gradient of $I_1$.

Where current $I_1$ generated by first current generator 28 is negligible in comparison with control current $I_{PUMP}$ generated by current amplifier device 16, a rising front which is even straighter than the broken line illustrated in Figure 7 is obtained.

Indeed in this case, when current $I_1$ is made negligible the gradient of first section M1 is cancelled out, while the gradients of sections M2 and M3 substantially adopt the same value; in fact as the contribution from current $I_1$ provided by first current generator 28 is negligible, current Ig fed to the gate terminal of NMOS transistor 12 corresponds to the pump current $I_{PUMP}$ in sections M2 and M3. In this case current amplifier device 16 may have the same circuit configuration as illustrated in Figure 2, and therefore not have comparator 56 and logic gate 58.

As far as the generation of descending fronts is concerned (Figure 9), the principle of operation of electronic device 60 during switching is substantially similar to that described above. In this case in fact control logic 24 causes disabling of first current generator 28, disabling of current amplifier device 16 and activation of second current generator 32 which drains a constant current $I_2$ from the gate terminal of NMOS transistor 12 to earth.

With reference to Figure 5, electronic device 60 finally comprises a condenser 70, which has a capacitance C1 and is connected between second input 4 and a fourth input 64 in turn connected to the gate terminal of NMOS transistor 12.

Condenser 70 may be connected externally to electronic device 1 in such a way as to permit manual adjustment of its capacitance $C_1$ so as to allow both change in the gradient of the rising and descending fronts of potential Vs and also vary the position of the electromagnetic disturbance spectrum generated by the switching fronts in relation to a reference frequency.

In fact, adjustment of the capacitance $C_1$ of condenser 70 makes it possible to configure the gradient of the rising and descending fronts of control potential Vs in accordance with the relationship:

$$7) \quad d^Vg/dt = Ig/(Cg + C_1)$$

In particular, solving differential equation 7) with respect to potential Vs it can be seen that the gradient of the rising or descending front of potential Vs corresponds to Ig/(Cg + $C_1$); it is therefore obvious that variation of the overall gate capacitance of NMOS transistor 12 is achieved by adjusting capacitance $C_1$, bringing about a corresponding variation in the gradients of the switching fronts for voltage Vs.

Adjustment of capacitance $C_1$ also advantageously makes it possible to suitably shift the electromagnetic disturbance spectrum SP generated by electromagnetic device 1 along the frequency axis (Figure 10). For example by increasing the capacitance $C_1$ of condenser 70 the switching delay of NMOS transistor 12 can be increased, bringing about a displacement in spectrum SP' (shown by a dashed line in Figure 10) towards lower frequencies.

By adjusting the capacitance $C_1$ of external condenser 70 it is therefore possible to position the minimum peak P1 for the electromagnetic disturbance spectrum SP generated by electronic device 60 in relation to a frequency band used by the electronic systems present on board the vehicle (shown in relation to P1' in Figure 10), thus reducing the interference conditions caused by these electromagnetic disturbances to a minimum.

In a different embodiment, not illustrated, condenser 70 is connected between an input set to a reference potential, for example an earth potential or a predetermined potential, and fourth input 64.

The advantages of electronic device 60 are obvious. Thanks to the new configuration of the connections of current amplifier device 16, this generates rising/descending fronts for control potential Vs which have a substantially linear profile devoid of discontinuities, thus bringing about a great reduction in electromagnetic disturbances. In the case in point a decrease in the gradient and rounding of the fronts brings about a reduction in radiated electromagnetic emissions.

In addition to this, the presence of external condenser 70 makes it possible to calibrate the position of the emitted disturbance spectrum in relation to the useful "band" used by the electronic systems on board the vehicle, in addition to the gradient of the switching fronts for control potential Vs.

Thus through an analysis of the emission spectra of the signals it is possible to envisage the impact of a particular switching characteristic of the electronic device on an electronic system in the vehicle and define from the outset the best specific calibration which has to be implemented in order to respect the interference limits for the other electronic components on the vehicle defined by the standards.

Finally it is clear that modifications and variants may be made to device 60 described and illustrated here without thereby going beyond the scope of this invention, which is defined by the appended claims.

According to a variant which is not illustrated, the connections of control terminal 41 and first feed terminal 40 are changed over so as to reverse their corresponding potentials.

In particular control terminal 41 of current amplifier device 16 is directly connected to second input terminal 4 set to potential $V_{BAT}$ in such a way that potential $V_{CAP}$ takes the value $V_{CAP} = V_{BAT}$, while first feed terminal 40 is connected to control output 8 in such a way that its potential $V_{AL}$ takes a value equal to that of the control potential Vs.

In a manner wholly similar to the circuit configuration of electronic device 60 described above, this circuit configuration makes it possible to obtain a linear profile for the rising/descending fronts of control potential Vs.

In fact in this case the equations describing current Ig fed to the gate terminal of NMOS transistor 12 are as follows:

$$8) \quad Ig \cong I_1 + v_{sp} C_{sp} (V_{AL} + V_{CAP} - 2Vd - Vg)$$

According to the abovementioned variant, potentials $V_{AL}$ and $V_{CAP}$ are inverted, taking the values $V_{AL} = Vs = Vg - V_{gsth}$ and $V_{CAP} = V_{BAT}$ respectively.

By replacing the new expressions for $V_{AL}$ and $V_{CAP}$ in equation 8) the following equation is obtained:

$$9) \quad Ig \cong I_1 + v_{sp} C_{sp} (Vg - Vgsth + V_{BAT} - 2Vd - Vg)$$

in which, similarly to equation 5) described above, the dependency between current Ig and the potential Vg present in the second member is cancelled out,

$$10) \quad Ig \cong I_1 + v_{sp} C_{sp} (V_{BAT} - V_{gsth} - 2Vd)$$

Then replacing expression 10) for current Ig in the following differential equation

$$11) \quad dVg/dt = Ig/Cg$$

and solving 11) for the variable Vg associated with the potential Vg it is found in a way wholly similar to the solution described above that output potential Vs advantageously adopts a substantially linear profile having a constant gradient for both the rising fronts and the descending fronts.

## Claims

1. Electronic device (60) for the control of at least one electrical utility (10) in a vehicle comprising a first input (2) receiving a control signal ($S_p$), a second input (4) set to a first reference potential ($V_{BAT}$), a third input (6) set to a second reference potential ($V_{GND}$), a control output (8) on which is provided a control potential ($V_S$) for the said electrical utility (10), the electronic device (60) also comprising:

   - switching means (12) located between the second input (4) and the said control output (8) and provided with a control terminal capable of receiving a first predetermined current ($I_1$, $I_2$) and a pumping current ($I_{PUMP}$),
   - current amplifier means (16), which comprise a first input terminal (34) receiving the said control signal ($S_p$),

an output terminal (36) providing the said pumping current ($I_{PUMP}$), the first feed terminal (40) set to a third potential ($V_{AL}$), a second feed terminal (42) set to the second reference potential ($V_{GND}$), a control terminal (41) set to a fourth potential ($V_{CAP}$), switching means (48) receiving the said control signal ($S_p$) and generating on its own output a fifth reference potential ($V_{COM}$) which can be switched on the basis of the said control signal ($S_p$) between the said third potential ($V_{AL}$) present on the said first feed terminal (40) and the second reference potential ($V_{GND}$) present on the said second feed terminal (42), and condenser (50) having a first terminal set to the said fifth condenser potential ($V_{COM}$) and a second terminal connected to an intermediate node (45) located between the said output terminal (36) and the said control terminal (41),

the said electronic device (60) being **characterised in that** the said first feed terminal (40) of the said control terminal (41) for the current amplifier means (16) is connected to the second feed input (4) and the said control output (8) in such a way that the third potential ($V_{AL}$) and the fourth potential ($V_{CAP}$) take the said first feed potential ($V_{BAT}$) and the said control potential (Vs) respectively in a first circuit configuration or the said control potential (Vs) and the said first feed potential ($V_{BAT}$) respectively in a second circuit configuration, wherein a comparator (56) in the current amplifier (16) disables or activates said current amplifier (16).

2. Electronic device according to claim 1, **characterised in that** it comprises a fourth input (64) connected to the said control terminal of the said switching means (12) and capacitance means (70) connected between the said fourth input (64) and the said second input (4).

3. Electronic device according to claim 2, **characterised in that** the said capacitance means (70) comprise at least one condenser having adjustable capacitance.

4. Electronic device according to any one of the preceding claims, **characterised in that** the said current amplifier means (16) comprise comparator means (56) having a first input connected to the said control terminal (41), the second input set to a reference potential ($V_{RIF}$) and an output capable of providing a logic signal ($S_L$) which can be switched between the first logic level when the said reference potential ($V_{RIF}$) is less than the said fourth potential ($V_{CAP}$) and a second logic level when the said reference potential ($V_{RIF}$) is greater than the said fourth potential ($V_{CAP}$) and logic control means (58) capable of commanding inhibition of the said current amplifier means (16) when the said logic signal ($S_L$) is at the first logic level, and activation of the said current amplifier means (16) when the said comparison signal is at the second logic level.

5. Electronic device according to any one of the preceding claims, **characterised in that** the said first predetermined current ($I_1$) has a negligible value in comparison with the said pumping current ($I_{PUMP}$) generated.by the said current amplifier means (16).

6. Electronic device according to any one of the preceding claims, **characterised in that** the said current amplifier means (16) generate a pumping current ($I_{PUMP}$) equal to the said first predetermined current ($I_1$).

7. Electronic device according to any one of claims 4 and 6, **characterised in that** the said switching means (12) comprise at least one NMOS transistor.

8. Electronic device according to claim 7, **characterised in that** the said current amplifier means (16) comprise switching means (43, 47) located between the said control terminal (41) and the said output terminal (36), the said reference voltage ($V_{RIF}$) being substantially equal to the sum of the threshold voltage ($V_{gsth}$) of the said NMOS transistor and the voltage drop ($V_d$) on the said switching means (43, 47).

9. Electronic device according to any one of the preceding claims, **characterised in that** the said control signal ($S_p$) is a PWM signal.

**Patentansprüche**

1. Elektronische Vorrichtung (60) für die Steuerung von mindestens einem elektrischen Dienstprogramm (10) in einem Fahrzeug, mit: einem ersten Eingang (2), der ein Steuersignal ($S_p$) empfängt, einem zweiten Eingang (4), der auf ein erstes Bezugspotential ($V_{BAT}$) gesetzt ist, einem dritten Eingang (6), der auf ein zweites Bezugspotential ($V_{GND}$) gesetzt ist, einem Steuerausgang (8), an dem ein Steuerpotential ($V_s$) für das besagte elektrische Dienstprogramm (10) bereitgestellt wird, wobei die elektronische Vorrichtung (60) ebenfalls umfasst:

- Schaltmittel (12), die zwischen dem zweiten Eingang (4) und dem besagten Steuerausgang (8) lokalisiert und mit einem Steueranschluss ausgestattet sind, der im Stande ist, einen ersten vorbestimmten Strom ($I_1$, $I_2$) und einen Pumpstrom ($I_{PUMP}$) zu empfangen,

- Stromverstärkermittel (16), die umfassen: einen ersten Eingangsanschluss (34), der das besagte Steuersignal ($S_p$) empfängt, einen Ausgangsanschluss (36), der den besagten Pumpstrom ($I_{PUMP}$) bereitstellt, den ersten Speiseanschluss (40), der auf ein drittes Potential ($V_{AL}$) gesetzt ist, einen zweiten Speiseanschluss (42), der auf das zweite Bezugspotential ($V_{GND}$) gesetzt ist, einen Steueranschluss (41), der auf ein viertes Potential ($V_{CAP}$) gesetzt ist, ein Schaltmittel (48), das das besagte Steuersignal ($S_p$) empfängt und an seinem eigenen Ausgang ein fünftes Bezugspotential ($V_{COM}$) erzeugt, das auf der Grundlage des besagten Steuersignals ($S_p$) zwischen dem besagten dritten Potential ($V_{AL}$), das an dem besagten ersten Speiseanschluss (40) vorhanden ist, und dem zweiten Bezugspotential ($V_{GND}$), das an dem besagten zweiten Speiseanschluss (42) vorhanden ist, umgeschaltet werden kann, und einen Kondensator (50) mit einem ersten Anschluss, der auf das besagte fünfte Bezugspotential ($V_{COM}$) gesetzt ist, und einem zweiten Anschluss, der mit einem Zwischenknoten (45) verbunden ist, der zwischen dem besagten Ausgangsanschluss (36) und dem besagten Steueranschluss (41) lokalisiert ist,

wobei die besagte elektronische Vorrichtung (60) **dadurch gekennzeichnet ist, dass** der besagte erste Speiseanschluss (40) des besagten Steueranschlusses (41) für die Stromverstärkermittel (16) mit dem zweiten Speiseeingang (4) und dem besagten Steuerausgang (8) auf eine derartige Weise verbunden ist, dass das dritte Potential ($V_{AL}$) und das vierte Potential ($V_{CAP}$) das besagte erste Speisepotential ($V_{BAT}$) bzw. das besagte Steuerpotential ($V_s$) in einer ersten Schaltungskonfiguration oder das besagte Steuerpotential ($V_s$) bzw. das besagte erste Speisepotential ($V_{BAT}$) in einer zweiten Schaltungskonfiguration nehmen, wobei ein Komparator (56) in dem Stromverstärker (16) den besagten Stromverstärker (16) sperrt oder aktiviert.

2. Elektronische Vorrichtung gemäß Anspruch 1, **dadurch gekennzeichnet, dass** sie einen mit dem besagten Steueranschluss der besagten Schaltmittel (12) verbundenen vierten Eingang (64) und zwischen dem besagten vierten Eingang (64) und dem besagten zweiten Eingang (4) verbundene Kapazitätsmittel (70) umfasst.

3. Elektronische Vorrichtung gemäß Anspruch 2, **dadurch gekennzeichnet, dass** die besagten Kapazitätsmittel (70) mindestens einen Kondensator mit einstellbarer Kapazität umfassen.

4. Elektronische Vorrichtung gemäß einem der vorhergehenden Ansprüche, **dadurch gekennzeichnet, dass** die besagten Stromverstärkermittel (16) umfassen: Komparatormittel (56) mit einem ersten Eingang, der mit dem besagten Steueranschluss (41) verbunden ist, dem zweiten Eingang, der auf ein Bezugspotential ($V_{RIF}$) gesetzt ist, und einem Ausgang, der im Stande ist, ein Logiksignal ($S_L$) bereitzustellen, das zwischen dem ersten Logikpegel, wenn das besagte Bezugspotential ($V_{RIF}$) geringer als das besagte vierte Potential ($V_{CAP}$) ist, und einem zweiten Logikpegel, wenn das besagte Bezugspotential ($V_{RIF}$) größer als das besagte vierte Potential ($V_{CAP}$) ist, umgeschaltet werden kann, und Logiksteuermittel (58), die im Stande sind, die Sperrung der besagten Stromverstärkermittel (16), wenn das besagte Logiksignal ($S_L$) auf dem ersten Logikpegel ist, und die Aktivierung der besagten Stromverstärkermittel (16), wenn das besagte Vergleichssignal auf dem zweiten Logikpegel ist, anzuweisen.

5. Elektronische Vorrichtung gemäß einem der vorhergehenden Ansprüche, **dadurch gekennzeichnet, dass** der besagte erste vorbestimmte Strom ($I_1$) einen vernachlässigbaren Wert im Vergleich mit dem durch die besagten Stromverstärkermittel (16) erzeugten besagten Pumpstrom ($I_{PUMP}$) aufweist.

6. Elektronische Vorrichtung gemäß einem der vorhergehenden Ansprüche, **dadurch gekennzeichnet, dass** die besagten Stromverstärkermittel (16) einen Pumpstrom ($I_{PUMP}$) erzeugen, der gleich dem besagten ersten vorbestimmten Strom ($I_1$) ist.

7. Elektronische Vorrichtung gemäß einem der Ansprüche 4 und 6, **dadurch gekennzeichnet, dass** die besagten Schaltmittel (12) mindestens einen NMOS-Transistor umfassen.

8. Elektronische Vorrichtung gemäß Anspruch 7, **dadurch gekennzeichnet, dass** die besagten Stromverstärkermittel (16) Schaltmittel (43, 47) umfassen, die zwischen dem besagten Steueranschluss (41) und dem besagten Ausgangsanschluss (36) lokalisiert sind, wobei die besagte Bezugsspannung ($V_{RIF}$) im Wesentlichen gleich der Schwellenspannung ($V_{gsth}$) des besagten NMOS-Tansistors und dem Spannungsabfall ($V_d$) an den besagten Schaltmitteln (43, 47) ist.

**9.** Elektronische Vorrichtung gemäß einem der vorhergehenden Ansprüche, **dadurch gekennzeichnet, dass** das besagte Steuersignal ($S_p$) ein PWM-Signal ist.

**Revendications**

**1.** Dispositif électronique (60) pour la commande d'au moins un utilitaire électrique (10) dans un véhicule comprenant une première entrée (2) recevant un signal de commande ($S_P$), une deuxième entrée (4) réglée sur un premier potentiel de référence ($V_{BAT}$), une troisième entrée (6) réglée sur un deuxième potentiel de référence ($V_{GND}$), une sortie de commande (8) à laquelle est appliqué un potentiel de commande ($V_S$) pour ledit utilitaire électrique (10), le dispositif électronique (60) comprenant également :

- des moyens de commutation (12) disposés entre la deuxième entrée (4) et ladite sortie de commande (8) et munis d'une borne de commande capable de recevoir un premier courant prédéterminé ($I_1$, $I_2$) et un courant de pompage ($I_{PUMP}$),
- des moyens amplificateurs de courant (16), qui comprennent une première borne d'entrée (34) recevant ledit signal de commande ($S_P$), une borne de sortie (36) fournissant ledit courant de pompage ($I_{PUMP}$), la première borne d'alimentation (40) réglée sur un troisième potentiel ($V_{AL}$), une deuxième borne d'alimentation (42) réglée sur le deuxième potentiel de référence ($V_{GND}$), une borne de commande (41) réglée sur un quatrième potentiel ($V_{CAP}$), des moyens de commutation (48) recevant ledit signal de commande ($S_p$) et générant à sa propre sortie un cinquième potentiel de référence ($V_{COM}$) qui peut être commuté sur la base dudit signal de commande ($S_P$) entre ledit troisième potentiel ($V_{AL}$) présent sur ladite première borne d'alimentation (40) et le deuxième potentiel de référence ($V_{GND}$) présent sur ladite deuxième borne d'alimentation (42), et un condenseur (50) ayant une première borne réglée sur ledit cinquième potentiel de référence ($V_{COM}$) et une deuxième borne connectée à un noeud intermédiaire (45) placé entre ladite borne de sortie (36) et ladite borne de commande (41), ledit dispositif électronique (60) étant **caractérisé en ce que** ladite première borne d'alimentation (40) de ladite borne de commande (41) pour les moyens amplificateurs de courant (16) est connectée à la deuxième entrée d'alimentation (4) et ladite sortie de commande (8) de sorte que le troisième potentiel ($V_{AL}$) et le quatrième potentiel ($V_{CAP}$) prennent ledit premier potentiel d'alimentation ($V_{BAT}$) et ledit potentiel de commande ($V_S$), respectivement, dans une première configuration de circuit ou ledit potentiel de commande ($V_S$) et ledit premier potentiel d'alimentation ($V_{BAT}$), respectivement, dans une deuxième configuration de circuit, dans laquelle un comparateur (56) de l'amplificateur de courant (16) désactive ou active ledit amplificateur de courant (16).

**2.** Dispositif électronique selon la revendication 1, **caractérisé en ce qu'**il comprend une quatrième entrée (64) connectée à ladite borne de commande desdits moyens de commutation (12) et des moyens capacitifs (70) connectés entre ladite quatrième entrée (64) et ladite deuxième entrée (4).

**3.** Dispositif électronique selon la revendication 2, **caractérisé en ce que** lesdits moyens capacitifs (70) comprennent au moins un condenseur ayant une capacité ajustable.

**4.** Dispositif électronique selon l'une quelconque des revendications précédentes, **caractérisé en ce que** lesdits moyens amplificateurs de courant (16) comprennent des moyens comparateurs (56) ayant une première entrée connectée à ladite borne de commande (41), la deuxième entrée réglée sur un potentiel de référence ($V_{RIF}$) et une sortie capable de fournir un signal logique ($S_L$) qui peut être commuté entre le premier niveau logique lorsque ledit potentiel de référence ($V_{RIF}$) est inférieur audit quatrième potentiel ($V_{CAP}$) et un deuxième niveau logique lorsque ledit potentiel de référence ($V_{RIF}$) est supérieur audit quatrième potentiel ($V_{CAP}$), et des moyens de commande logiques (58) capables de commander la désactivation desdits moyens amplificateurs de courant (16) lorsque ledit signal logique ($S_L$) est au premier niveau logique et l'activation desdits moyens amplificateurs de courant (16) lorsque ledit signal de comparaison est au deuxième niveau logique.

**5.** Dispositif électronique selon l'une quelconque des revendications précédentes, **caractérisé en ce que** ledit premier courant prédéterminé ($I_1$) a une valeur négligeable par rapport audit courant de pompage ($I_{PUMP}$) généré par lesdits moyens amplificateurs de courant (16).

**6.** Dispositif électronique selon l'une quelconque des revendications précédentes, **caractérisé en ce que** lesdits moyens amplificateurs de courant (16) génèrent un courant de pompage ($I_{PUMP}$) égal audit premier courant prédéterminé ($I1$).

**7.** Dispositif électronique selon l'une quelconque des revendications 4 et 6, **caractérisé en ce que** lesdits moyens de commutation (12) comprennent au moins un transistor NMOS.

**8.** Dispositif électronique selon la revendication 7, **caractérisé en ce que** lesdits moyens amplificateurs de courant (16) comprennent des moyens de commutation (43, 47) situés entre ladite borne de commande (41) et ladite borne de sortie (36), ladite tension de référence ($V_{RIF}$) étant sensiblement égale à la somme de la tension seuil ($V_{gsth}$) dudit transistor NMOS et de la chute de tension ($V_d$) sur lesdits moyens de commutation (43, 47).

**9.** Dispositif électronique selon l'une quelconque des revendications précédentes, **caractérisé en ce que** ledit signal de commande ($S_P$) est un signal PWM.

Fig.1

Fig.2

Fig.3

Fig.7

Fig.5

Fig.6

Fig.4

Fig.8

Fig.9

Fig.10

15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6441557 B